# EUROPEAN PATENT SPECIFICATION

(11) **EP 3 944 775 B1**
(45) Date of publication and mention of the grant of the patent: **01.03.2023**
(21) Application number: 21176641.5
(22) Date of filing: 28.05.2021
(51) Int. Cl.: A24F 1/28, C03B 23/049

(54) **DISPOSABLE VIAL FOR PACKING TOBACCO TO BE SMOKED WITH INDENT FOR WICK AND METHOD FOR MANUFACTURING**
EINWEGPHIOLE ZUM VERPACKEN VON ZU RAUCHENDEM TABAK MIT EINKERBUNG FÜR DOCHT UND VERFAHREN ZUR HERSTELLUNG
FLACON JETABLE POUR EMBALLER DU TABAC À FUMER DOTÉ D'UNE INDENTATION DE MÈCHE ET PROCÉDÉ DE FABRICATION

(30) Priority: 28.07.2020 US 202016941245
(43) Date of publication of application: 02.02.2022
(73) Proprietor: R.Y.L. Inc., Commerce, California 90040 (US)
(72) Inventor: OU, Suk Hwan, COMMERCE, 90040 (US)
(74) Representative: Regimbeau

(56) References cited:
- WO-A1-2014/093181
- CA-A1- 2 271 404
- US-B2- 10 602 772

## Description

The invention is related to a method of manufacturing a vial for use in smoking a substance from the vial and to a vial for packing a substance to be smocked from the vial. More specifically, a method of manufacturing a disposable vial within which tobacco may be packed and smoked. An indent is provided for wrapping a wick made of hemp or similar material used to provide a long lasting flame when lit. Other embodiments are also described.

### BACKGROUND

Various devices exist for smoking substances such as tobacco. The most commonly used device is a cigarette or cigar, which consists of tobacco rolled within a thin paper. The cigarette or cigar is ignited at one end and smoke, which is emitted from the tobacco (once ignited or smoldering), is inhaled or tasted from the other end. In addition to cigarettes, there are tobacco pipes which are designed to hold tobacco in a bowl formed at one end and allow the user to inhale or taste smoke or vapor emitted from the burning or vaporization of the tobacco from another end. In particular, a tobacco pipe typically consists of an upwardly facing bowl for holding the tobacco, a stem (or shank) that extends from the bowl and ends in a mouth piece (the bit). Cigarettes and cigars are disposable, while most tobacco pipes are not.

US 10 602 772 B2 discloses a method for manufacturing vial for packing substance to be smoked from vial and involves applying pressure around heated section of tubular portion to collapse section of tubular portion into hollow interior of tubular portion.

### SUMMARY

According to the invention there is provided a method of manufacturing a vial as defined in claim 1 and in the corresponding depending claims, as well as a vial for packing a substance to be smoked from the vial as defined in claim 7 and in the corresponding depending claims.

The instant disclosure is directed to a process of manufacturing a disposable vial for packing a substance (e.g. tobacco) to be smoked from the vial. The process may include heating a narrow section of a vial (e.g. a glass vial) in the shape of a cylindrical tube having an opening at both ends. The heated section is near one of the two ends The vial should be rotating at anywhere from 30 revolutions per minute (RPM) to 60 RPM during the entire process. After the vial is heated enough to manipulate it, in one embodiment, a tool (e.g. a graphite tool) is used to press the heated section of the vial to create an hourglass shape. Once the hourglass shape is formed, the same section of the vial is again heated. While heating, both ends of the vial are pressed together until the vial walls are flush again. In other words, the sections of the wall which form an indentation in the outer surface between each side of the hourglass shape are pressed together again so that the indentation is removed. In another embodiment, instead of using a tool to press the heated section to create the hourglass shape, as the section is being heated, both ends of the vial are pressed together while applying a roller to the outer surface of the vial adjacent to the heated section so that the vial collapses due to the pressure from the roller applied to the outer surface and the pressure supplied by both ends being pressed together. This results in the same hour glass shape being formed, but without the outside diameter of the vial being collapsed since no tool is applied to press the glass inward. The only pressure applied to outer surface is from the roller which is used to maintain the outer diameter of the vial, not press it inwards.

After the two ends of the vial are pressed together until the vial walls are flush again, a second, wider section near the middle of the vial may be heated and then stretched so that a second, wider tool, such as a graphite tool, is used to press the second, wider section of the rotating vial to form a second, wider, and indented section. This wider, indented section has a shape similar to an hour glass, but with a much longer neck portion which is formed as the tool is pressed against the heated section vial as it is rotated while being compressed from both ends until the second section has a reduced inner and outer diameter so that the finished product has an opening at one end, a short hour glass structure, an elongated, narrow middle portion and followed by a third section which extends from a second end of the narrow middle portion to the second end of the vial. The formed vial therefore has a first opening at one end adjacent to a first chamber, a short narrow portion or neck connecting the first chamber to a second chamber. The elongated middle portion extends from the second chamber to a third chamber which ends at the opening on the opposite end of the vial from the first opening. The inner and outer diameters of the three chambers may be approximately the same. The outer diameter of the hour glass shaped structure is about the same as the outer diameter of the three chambers. The inner diameter of the elongated narrow middle portion is smaller than the inner diameter of the three chambers. This diameter may be the same as, less than or greater than the diameter of the shorter, narrow section. The inner and outer diameters of the openings at the opposite ends of the vial are about the same. It is also possible to apply the heat to both sections of the vial at the same time, and apply the first and second tools at the same time to provide a same disposable vial if produced by the separate heating and pressing operations.

More specifically, in one aspect, a method of manufacturing a vial for packing a substance to be smoked from the vial is provided. The method may include providing a vial which includes a first end portion and a second end portion connected by a tubular portion having a hollow interior. In an embodiment, a first end portion and the second end portion are initially open, but one end or both could be initially closed, with openings formed at a later time. Preferably, both openings have the same inner and outer diameters, but such diameters may differ. The method further includes forming a first chamber, a second chamber, and elongated middle portion, and a third chamber within the hollow interior of the tubular portion. The opening in the second end portion may be an inhalation port, which may be the same diameter as an opening in the first end portion, or a smaller diameter. In one aspect, the first, second and third chambers may be formed by heating a portion of a wall forming the tubular portion of the vial. Once the portion of the wall is heated, an inward pressure may be applied to the portion of the wall to collapse the wall into the hollow interior of the tubular portion to form a short neck portion within the hollow interior of the tubular portion. The short neck portion may be dimensioned to separate the first chamber from the second chamber, and the middle portion may be dimensioned to separate the second chamber from the third chamber. In one embodiment, during or after forming the short neck portion, heat may be applied to the portion of the wall forming the neck portion, and the first end portion and the second end portion of the vial are pushed toward one another until an exterior surface of the tubular portion circumferentially outward to the neck portion is flush with the rest of the tubular portion. The vial may be rotated while applying the heat and the pressure to the portion of the wall. After the tubular portion circumferentially outward to the neck portion is flush with the rest of the tubular portion, in an embodiment, heat is applied to a middle portion of the vial until the glass is hot enough to manipulate, the rotation is stopped and both ends of the tube are pulled in opposite directions which causes the middle portion to begin to collapse. Heat is again applied to the elongated middle portion and an inward pressure is applied to the middle portion as the vial is rotated. Pressure is also applied the first end portion and the second end portion and inward pressure continues to be applied to the middle portion to even out and reduce the outside diameter of the vial in the middle portion. In one aspect, if the vial is closed at the second end, the opening in the second end portion may be formed by heating the second end portion and introducing air into the opening in the first end portion until the opening in the second end portion is formed.

In another aspect, there is disclosed a method of manufacturing a vial for packing a substance to be smoked from the vial includes providing a glass vial that includes a first end portion and a second end portion connected by a tubular portion forming openings at both ends. The method may further include applying heat to a section of the tubular portion to heat the section of the tubular portion and applying a pressure around the heated section of the tubular portion to collapse the section of the tubular portion into the hollow interior of the tubular portion. Collapsing the tubular portion forms a neck within the hollow interior of the tubular portion. The neck may include an opening that is narrower than an opening of the first end portion. In addition, the first end portion and the second end portion are pressed together until an exterior surface of the tubular portion surrounding the collapsed section is level with a remaining exterior surface of the tubular portion. An elongated narrowed middle portion may be formed in a similar manner except that the narrowed portion forming the elongated narrowed middle portion maintains its smaller diameter.

In another aspect, the method of manufacturing includes wrapping a wick around the elongated narrowed middle portion.

According to another aspect, there is disclosed a method of manufacturing a vial, the method comprising:
providing a vial, the vial having a first end portion and a second end portion connected by a tubular member having a hollow interior;
forming a first chamber and a second chamber within the hollow interior of the tubular member, wherein the first chamber and the second chamber are separated by a neck portion within the hollow interior, said first chamber extending from said first end portion to a first side of said neck portion, said second chamber extending from a second side of said neck portion; and
forming a middle portion within the hollow interior of the tubular portion, one end of said middle portion adjacent to an end of said second chamber;
forming a third chamber within the hollow interior of the tubular member, said third chamber extending from a second end of said middle portion to said second end portion;
wherein said formed middle portion has an outer diameter which is less than an outer diameter of each of said first chamber, said second chamber and said third chamber, and an inner diameter which is less than an inner diameter of each of said first chamber, said second chamber and said third chamber.

Preferable but not limited aspects of such method of manufacturing a vial, taken alone or in combination, are the following:
- said forming the first chamber and the second chamber comprises applying heat to a portion of a wall forming the tubular portion of the vial; and while rotating the vial along its longitudinal axis, applying an inward pressure to the first end portion and the second end portion and simultaneously applying pressure to an exterior surface of the tubular member at the heated portion of the wall to collapse the heated portion of the wall into the hollow interior of the tubular member to form the neck portion within the hollow interior of the tubular member, and cause the exterior surface around the neck portion to be flush with the exterior surface of the rest of the tubular member, wherein said neck portion has in inner diameter which is less than said inner diameter of each of said first chamber, said second chamber and said third chamber.
- said forming the middle portion comprises applying heat to a second portion of the wall forming the tubular portion of the vial and applying an outward pressure to the first end portion and the second end portion to stretch the heated second portion of the wall a predetermined amount; and after said predetermined amount of stretch has been reached, applying an inward pressure to the first end portion and the second end portion and while rotating the vial along its longitudinal axis and applying an inward pressure to the second portion of the wall until the second portion of the wall has a uniform outer diameter which is substantially the same as the outer diameter of each of the first, second, and third chambers, said outer diameter of each of the first, second, and third chambers being substantially the same.
- said first end portion includes an open end for receiving a substance to be smoked in said first chamber and said second end portion includes an open end for inhaling vapor in said third chamber.
- the method further comprises after forming said third chamber, wrapping a wick around said formed middle portion.
- the vial includes an opening at at least one of said first and second end portions.
- the vial is a cylindrical tube with open ends.

In another aspect, there is disclosed a vial for packing a substance to be smoked from the vial is provided. The vial may include a first or receiving chamber having an open end dimensioned to receive a substance to be packed within the receiving chamber. The vial may further include a second or short vapor chamber extending from the receiving chamber followed by a narrowed middle portion, and then a third vapor chamber. The third vapor chamber may have an inhalation port at a second open end for outputting a vapor from a substance within the first or receiving chamber. In addition, the vial may include a first, short neck portion positioned between the receiving chamber and the short vapor chamber preceding narrowed middle portion preceding a third chamber. The short neck portion may have a wall extending concentrically inward from an arcuate wall forming the receiving chamber and the short or second vapor chamber. The narrowed middle portion may have a wall extending concentrically inward from an arcuate wall forming the second chamber and a second arcuate wall forming the narrowed middle portion. The wall may further include an opening that is axially aligned with the open end of the receiving chamber and the inhalation port of the third chamber. In some embodiments, a diameter of the receiving chamber is equal to or less than a diameter of the elongated vapor chamber. Still further, a length of the receiving chamber may be less than a length of the elongated vapor chamber. In addition, a width of the neck portion may be less than a length of the receiving chamber and the narrowed middle portion and the elongated vapor chamber. In one aspect, the interior wall forming the elongated vapor chamber may include a first side facing the open end of the narrowed middle portion and a second side facing the inhalation port. The receiving chamber, neck portion, the narrowed middle portion and the elongated vapor chamber may be integrally formed from a glass vial.

According to another aspect, there is disclosed a vial for packing a substance to be smoked from the vial, the vial comprising:
a first chamber having an open end dimensioned to receive a substance to be packed within the first chamber;
a second chamber in fluid connection with said first chamber separated from said first chamber by a neck portion having an inside diameter less than an inside diameter of said first chamber and an inside diameter of said second chamber, wherein an outside diameter of said first chamber, said second chamber and said neck portion are substantially the same;
a middle portion in fluid connection with said second chamber extending from an end of said second chamber to a first end of a third chamber, said third chamber in fluid connection with said middle portion at said first end of said third chamber, said third chamber having an inside diameter and outside diameter which is substantially the same as the inside and outside diameter of each of said first chamber and said second chamber, said middle portion having an inside diameter which is less than the inside diameter of said first, second and third chambers, and an outside diameter which is less than the outside diameter of said first, second and third chambers.

Preferable but not limited aspects of such vial, taken alone or in combination, are the following:
- said first chamber, said neck portion, said second chamber, said middle portion and said third chamber are axially aligned.
- a length of the first chamber is less than a length of the middle portion.
- a length of the second chamber is less than a length of the middle portion.
- a length of the neck portion is less than a length of the first chamber and a length of the second chamber.
- the first chamber, the neck portion, the second chamber, the middle portion and the third chamber are integrally formed from a glass vial.
- said first end portion includes an open end for receiving a substance to be smoked in said first chamber and said second end portion includes an open end for inhaling vapor in said third chamber.
- the vial further comprises a wick wrapped around said middle portion.
- said third chamber includes an open end dimensioned to enable vapors in said third chamber to be inhaled.
- the vial is a cylindrical tube with openings at each end of said tube.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" or "one" embodiment of the invention in this disclosure are not necessarily to the same embodiment, and they mean at least one. Also, a given figure may be used to illustrate the features of more than one embodiment of the invention in the interest of reducing the total number of drawings, and as a result, not all elements in the figure may be required for a given embodiment.
**Fig. 1** illustrates a side view of one embodiment of a vial formed by the process disclosed herein from which a substance may be smoked
**Fig. 2** illustrates a cross-sectional side view of the vial of **Fig. 1** along line 2-2.
**Fig. 3** illustrates a side view of one embodiment of a vial from which a vial for packing and smoking a substance may be manufactured.
**Fig. 4** illustrates the vial of **Fig. 3** after the further processing operation of applying pressure to a heated section of the vial.
**Fig. 5** illustrates the vial of **Fig. 4** after the further processing operation of operation of pressing the ends of the vial together while applying pressure from a roller to the heated section to maintain the outer diameter of the vial as it is being pressed inward from both ends.
**Fig. 6** illustrates the vial of **Fig. 5** after the further processing operation of pressing the ends of the vial together, to then applying heat to a middle portion of the vial.
**Fig. 7** illustrates the vial of **Fig. 6** after the further processing operation of applying heat to the middle portion of the vial, to then stretching the vial from both ends to collapse the heated middle portion of the vial.
**Fig. 8** illustrates the vial of **Fig. 7** after the further processing operation stretching the vial from both ends to collapse the heated middle portion of the vial, to then reapplying heat to the collapsed middle portion of the vial.
**Fig. 9** illustrates the vial of **Fig. 8** after the further processing operation reapplying heat to the collapsed middle portion of the vial, to then applying pressure using a roller applied to the collapsed middle portion as the vial is being pressed inward from both ends to form a collapsed middle portion with a constant outer diameter which is smaller than the outer diameter of the other sections of the vial.
**Fig. 10** illustrates a side view of one embodiment of a vial from which a substance may be smoked with a wick wrapped around the collapsed middle section which is formed after the processing shown in **Fig.** 7.

### DETAILED DESCRIPTION

Several embodiments of the invention with reference to the appended drawings are now explained. Whenever aspects of the embodiments described here are not explicitly defined, the scope of the invention is not limited only to the parts shown, which are meant merely for the purpose of illustration. Also, while numerous details are set forth, it is understood that some embodiments of the invention may be practiced without these details. In other instances, well-known circuits, structures, and techniques have not been shown in detail so as not to obscure the understanding of this description.

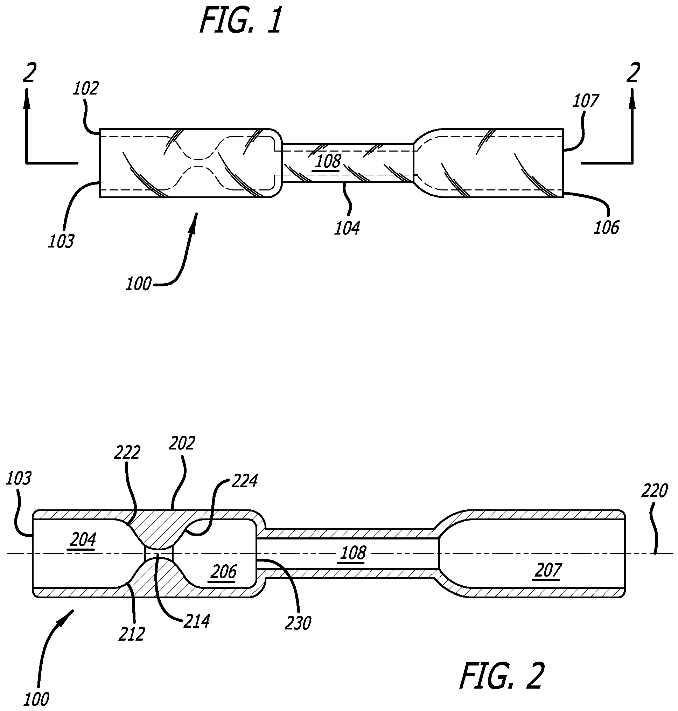

**Fig. 1** illustrates a side view of one embodiment of a vial from which a substance may be smoked. In one embodiment, vial 100 may be a vial that includes a first end portion 102, a second end portion 106 and a narrowed middle portion 104. The first end portion 102 may be substantially open by opening 103. The second end portion 106 may be substantially open with an opening 107 through which a fluid may pass from the first end portion to the second end portion. The fluid may, for example, be a vapor or gas given off by a substance (e.g. tobacco) smoked from vial 100. The middle portion 104 may be a tubular member having a substantially hollow interior 108. The substance to be smoked (e.g. tobacco) may be packed within vial 100 by inserting it into the opening 103 such that it is held near first end portion 102. During use, a flame is applied to first end portion 102 so that the substance packed is caused to burn or smolder and emit a vapor. The vapor from the burning or smoldering substance then can be inhaled by a user through the opening 107 shown in Fig. 1.

**Fig. 2** illustrates a cross-sectional side view of the vial of **Fig. 1** along line 2-2. From this view, it can be seen that the substantially hollow interior 108 of vial 100, which is defined by an exterior wall 202, is divided into a first chamber 204, a second chamber 206 separated from the first chamber by a short neck 214, and middle portion 104 connecting the second chamber to a third chamber 207. The first chamber 204 may extend from the opening 103 formed in first end portion 102 of vial 100 to the short neck 214. The first chamber 204 is open such that a substance can be introduced to the first chamber 204 through opening 103. In some cases, the first chamber 204 may have a diameter that is the same as opening 103. Representatively, the diameter of first chamber 204 may be large enough to allow a substance (e.g. tobacco) to be inserted into first chamber 204, such that once the substance is within first chamber 204, short neck 214 substantially prevents the substance from entering second chamber 206.

The first chamber 204 may be dimensioned to receive and hold a substance (e.g. tobacco) to be smoked from vial 100. In this aspect, first chamber 204 may also be referred to herein as a receiving chamber. The second chamber 206 may be dimensioned to receive a smoke or vapor emitted from the substance within first chamber 204 which then flows through neck 214 through narrowed middle portion 104 to third chamber 207. In this aspect, in some embodiments, third chamber 207 may be referred to herein as a smoke or vapor chamber. The third chamber 207 may have a length that is greater than a length of first chamber 204 and a length second chamber 206.

In order to keep a substance packed within first chamber 204from passing into second chamber 206, the first chamber 204 and the second chamber 206 may be separated by a neck portion 214. Neck portion 214 may be formed by an interior wall 212 that extends circumferentially inward from exterior wall 202. In one aspect, the interior wall 212 may include a first side 222 facing the first chamber 204 and opening 103 of first end 102 and a second side 224 facing narrowed middle portion 104. In this aspect, the first side 222 may form a portion of the first chamber 204 and the second side 224 may form a portion of the second chamber 206.

Interior wall 212 may include a neck 214 forming an opening of a size sufficient to allow smoke or vapor emitted from the substance within first chamber 204 to pass to second chamber 206 while still preventing the substance from passing from first chamber 204 to second chamber 206. In this aspect, in some embodiments, a diameter of the opening of neck portion 214 is less than a diameter of first chamber 204 and a diameter of second chamber 206. The diameter of first chamber 204 and the diameter of second chamber 206 may be substantially the same, or the diameter of first chamber 204 may be less than a diameter of second chamber 206 and third chamber 207. In addition, it is noted that in some embodiments, a width of interior wall 212 is less than a length of first chamber 204 and a length of second chamber 206. In this aspect, interior wall 212 is not considered to occupy a substantial area of the hollow interior 108.

It is further noted that in some embodiments, the opening of neck portion 214 is axially aligned with the opening 107 to third chamber 207. In other words, each of first opening 103, the opening in neck 214, the opening through narrowed middle portion 104, and second opening 107 are aligned along a longitudinal axis 220 of vial 100. Said another way, the entire length of vial 100 may be substantially straight such that it is symmetrical about axis 220, and in turn, each of first end opening 103, opening in neck 214, the opening 230 between second chamber 206 and narrowed middle portion 104 and second end opening 107 are also symmetrical about axis 220.

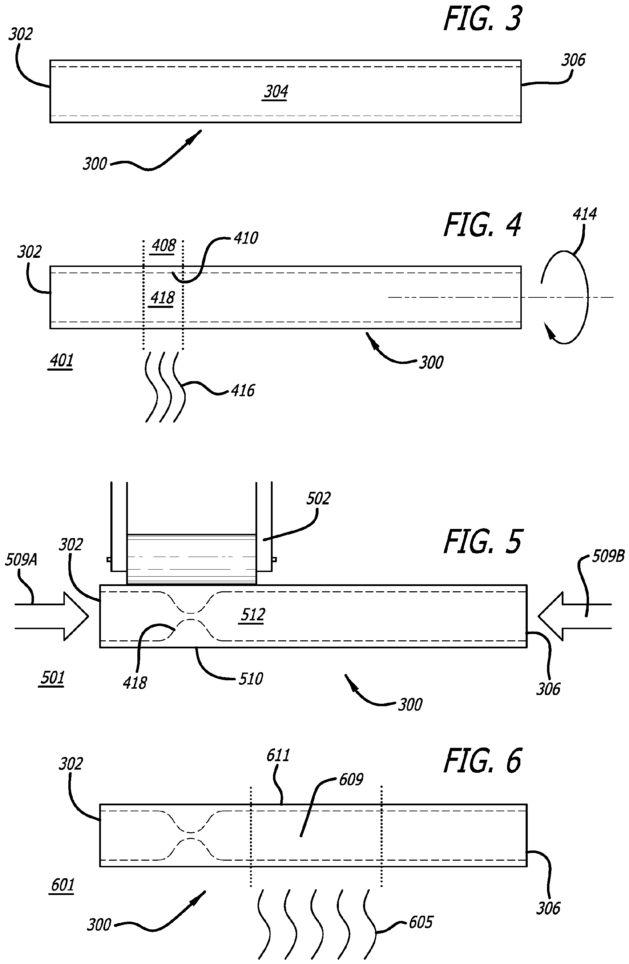

**Fig. 3** illustrates a side view of one embodiment of a vial from which a vial for packing and smoking a substance may be manufactured. Vial 300 may, for example, be a disposable glass vial made from clear borosilicate glass (33 exp) such as that available from Pacific Vial Manufacturing Inc., of Commerce, California. The vial 300 may be considered a disposable vial in that it is intended for single use and may be disposed of by the user. Similar to the previously discussed vial 100, vial 300 may include a first end portion 302 and a second end portion 306 which are connected by a middle portion 304.

As shown in **Fig 4****,** vial 300 may be rotated as shown by arrows 414 throughout all of the processing operations as disclosed herein. Representatively, vial 300 may be rotated at a rate of from about 30 revolutions per minute (RPM) to about 60 RPM. Vial 300 may be rotated by inserting the vial 300 into any conventional machine operable to rotate a vial at the desired RPM. Once the vial 300 is rotating, heat 416 may be applied to section 408 of vial 300 during processing operation 401. The heat 416 may be applied by, for example, a burner aligned with section 408 of vial 300. Heating section 408 softens the glass material of vial 300 so that the vial interior wall 410 may be collapsed into the hollow interior 418 of vial 300 adjacent first end 302, as will be described in more detail in reference to **Fig. 5****.** The heat applied should be at a temperature to soften the glass or other material used to make the vial so that the vial can be manipulated to form the vial as described herein. By way of example, the working point temperature for clear borosilicate glass (33 exp) is 1240 °C, with a softening point of 825 °C and an annealing point of 565 °C.

It should be noted that although specific processing parameters (e.g. rotation speed) may be disclosed herein, the parameters can vary depending upon, for example, the machine speed. For example, the heating time of the vial during any processing step disclosed herein depends on machine speed, which may produce around 22 parts per minute (ppm) plus or minus 2 ppm at a rotation speed of for example, from 30-60 RPM depending on machine speed and desired result. At 22 ppm, heat is applied for about 3 seconds per piece. As noted above, the specific temperatures, and times are dependent on the specifics of the glass or other material used to make the vial. Such specifics are well known to persons having ordinary skill in the art and therefore need not be further disclosed herein.

**Fig. 5** illustrates the vial of **Fig. 4** after the further processing operation of applying pressure to heated section 408 of the vial to collapse the heated section of the vial. In particular, in processing operation 501, a tool 502 is used to apply a pressure to the heated section 408 of vial 300. The application of heat 416 may be discontinued during operation 501. The tool 502 may be any type of relatively flat tool suitable for applying a flat pressure to wall 510 of vial 300. Tool 502 may be part of the machine used to heat and/or rotate vial 300. Representatively, tool 502 may be a graphite or steel tool having a roller end that is pressed by a machine against wall 510 while vial 300 is rotating. Applying a pressure to wall 510 by tool 502 within section 408 while pressure 509A and 509B applied to ends 302 and 306 respectively, causes inner wall 512 to collapse into hollow interior 418 as shown in **Fig. 5****.** The inward pressure may depend on how soft the glass is after the heating process but, in some cases may be, for example, from about 2-4 pounds per square inch (13.789 KPa-27.579 KPa). The amount of time the pressure is applied will depend on the machine speed. The collapsed wall sections form neck 214, as previously discussed in reference to **Fig. 2****.** In this aspect, the tool 502 should be used to apply a pressure sufficient to prevent exterior wall 510 from increasing in diameter as inward pressure 509A and 509B is applied. A space or gap should remain between the interfacing surfaces of the collapsed section of wall 510 so that an opening between the first end portion 302 and second end portion 306 is maintained.

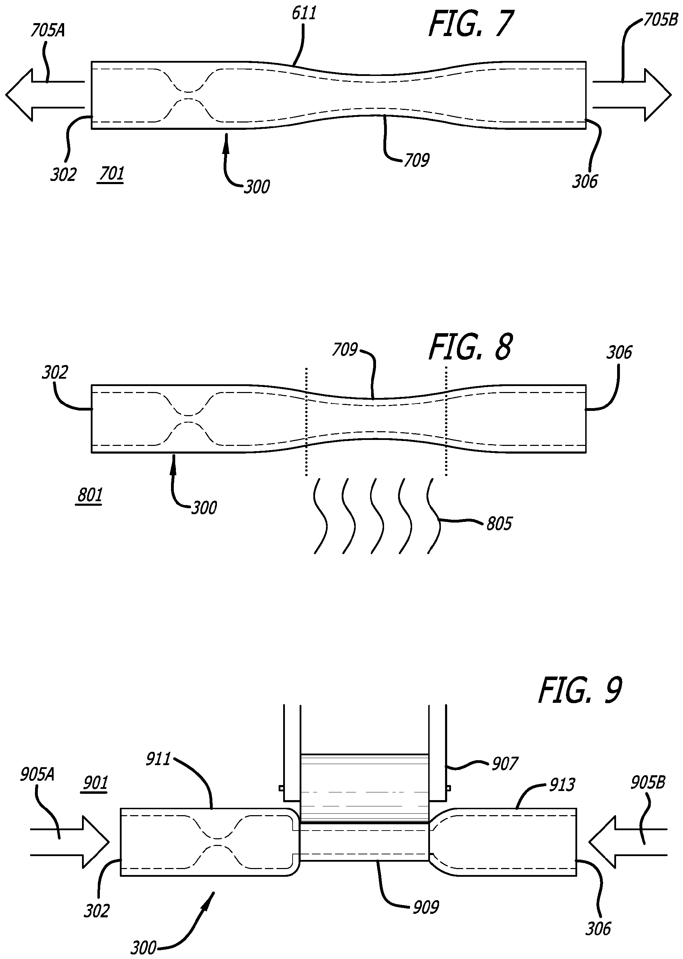

**Fig. 6** illustrates the vial of **Fig. 5** after the further processing operation of applying heat to the collapsed section of the vial and pressure via tool 502. Representatively, in processing operation 601, heat 605 is applied to the exterior of a middle portion 609 of vial 300 to soften section 609 and exterior wall 611 for further processing as described in **Fig. 7****.**

**Fig. 7** illustrates the vial of **Fig. 6** after the further processing operation of heating middle portion 609. In particular, in processing operation 701, an outward force 705A is applied to first end portion 302 and an outward force 705B is applied to second end portion 306. In this aspect, first end portion 302 and second end portion 306 are pulled away from each other. Due to the heat 605 applied to middle portion 609, the pulling force causes the middle portion to begin to collapse as shown in **Fig. 7****.** The outward forces 705A, 705B may be applied by a tool or machine associated with the previously discussed machinery that is designed to pull the ends apart. The tools used to pull the ends apart may be custom shaped steel tools attached to the machine. Again, the time and pressure will vary depending on machine speed, softness of glass, etc. First end 302 and second end 306 are pulled apart until an exterior surface of exterior wall 611 of middle portion 609 forms collapsed middle portion 709 as shown in **Fig. 7****.**

**Fig. 8** illustrates the vial of **Fig. 7** after the further processing operation forms collapsed middle portion 709. Representatively, processing operation 801 shows heat 805 applied to the exterior surface of collapsed middle portion 709 which softens the glass of middle portion 709 for the further processing to be performed with reference to **Fig. 9****.**

**Fig. 9** illustrates the vial of Fig. 8 after the further processing operation softens the glass of middle portion 709. As shown in **Fig 9****,** processing operation 901 utilizes a tool such as roller 907 which is applied to the middle portion of vial 300 forming middle portion 909 which has a constant outer and inner diameter which is smaller than the outer diameter of the other portions of vial 300. That is, as vial 300 is rotated as described above, the softened glass of the middle portion is shaped to be uniformly cylindrical for most of its extent, the outer diameter increasing at the ends of middle portion 909 until they meet with adjacent portions 911 and 913, each of which has a larger outer diameter. Applying an inward pressure to middle portion 909 by roller 907 while inward pressure 905A and 905B is applied to ends 302 and 306 causes the wall of vial 300 to have a constant, smaller diameter as shown in **Fig 9****.** The inward pressure may depend on how soft the glass is after the heating process but, in some cases may be, for example, from about 2-4 pounds per square inch (13.789 KPa-27.579 KPa). The amount of time the pressure is applied will depend on the machine speed. At the same time, ends 302 and 306 are pressed inwards so that as the vial is rotated and pressure from roller 907 is applied, wall of vial 300 at narrowed middle portion 909 is evened out with a reduced diameter as shown in **Fig 9****.** The collapsed wall forms narrowed middle portion 104 as previously discussed in reference to **Fig. 2****.** In this aspect, the roller 907 should be used to apply a pressure sufficient to even out the outer diameter at portion 909 while leaving, a space or gap between the interfacing surfaces of the collapsed portion 909 so that an opening between the first end portion 302 and second end portion 306 is maintained. As is the case with the other processing operations described herein, the time and pressure used during processing operation 901 will vary depending on machine speed, softness of glass, etc.

After processing operation 901 is completed, the vial forms a shape as described with reference to **Fig. 2****,** in which the vial at one end 103 forms a chamber 204 which is separated from adjacent chamber 206 by neck 214. Chamber 206 is then connected chamber 207 by hollow interior 108 formed by narrowed middle portion 104 which corresponds to middle portion 909 of **Fig. 9****.** Chamber 207 extends from middle portion 104 to end 106.

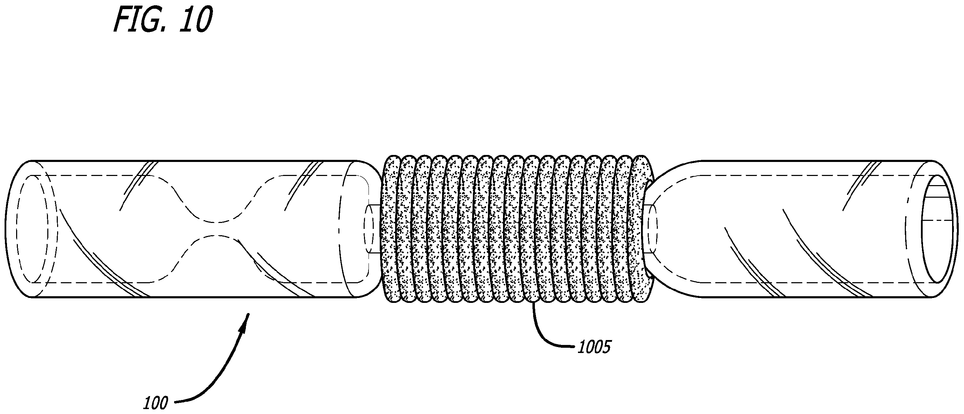

**Fig. 10** illustrates the vial of **Fig 9** with a wick 1005 wrapped around middle portion 909. The wick material may be made of hemp or another material which when lit will maintain a relatively even flame which can be applied to a substance packed into chamber 204 through opening 103.

While certain embodiments have been described and shown in the accompanying drawings, it is to be understood that such embodiments are merely illustrative of and not restrictive on the broad invention. For example, although a glass vial for smoking is described herein, it is contemplated that the vial may be made of any non-flammable material that will hold its shape during a smoking operation. Representatively, the vial may be a made of another inflammable material such as a ceramic or insulated metal material. In addition, it should be understood that each of the processing operations disclosed herein may be performed by a single machine or a combination of machines, such that each of the steps are considered automated and capable of being performed without user intervention.

## Claims

1. A method of manufacturing a vial, the method comprising:
providing a vial, the vial having a first end portion and a second end portion connected by a tubular member having a hollow interior;
forming a first chamber and a second chamber within the hollow interior of the tubular member, wherein the first chamber and the second chamber are separated by a neck portion within the hollow interior, said first chamber extending from said first end portion to a first side of said neck portion, said second chamber extending from a second side of said neck portion; and
forming a middle portion within the hollow interior of the tubular portion, one end of said middle portion adjacent to an end of said second chamber;
forming a third chamber within the hollow interior of the tubular member, said third chamber extending from a second end of said middle portion to said second end portion;
wherein said formed middle portion has an outer diameter which is less than an outer diameter of each of said first chamber, said second chamber and said third chamber, and an inner diameter which is less than an inner diameter of each of said first chamber, said second chamber and said third chamber.

2. The method of claim 1 wherein said forming the first chamber and the second chamber comprises:
applying heat to a portion of a wall forming the tubular portion of the vial; and
while rotating the vial along its longitudinal axis, applying an inward pressure to the first end portion and the second end portion and simultaneously applying pressure to an exterior surface of the tubular member at the heated portion of the wall to collapse the heated portion of the wall into the hollow interior of the tubular member to form the neck portion within the hollow interior of the tubular member, and cause the exterior surface around the neck portion to be flush with the exterior surface of the rest of the tubular member, wherein said neck portion has in inner diameter which is less than said inner diameter of each of said first chamber, said second chamber and said third chamber.

3. The method of claim 2 wherein said forming the middle portion comprises:
applying heat to a second portion of the wall forming the tubular portion of the vial and applying an outward pressure to the first end portion and the second end portion to stretch the heated second portion of the wall a predetermined amount; and
after said predetermined amount of stretch has been reached, applying an inward pressure to the first end portion and the second end portion and while rotating the vial along its longitudinal axis and applying an inward pressure to the second portion of the wall until the second portion of the wall has a uniform outer diameter which is substantially the same as the outer diameter of each of the first, second, and third chambers, said outer diameter of each of the first, second, and third chambers being substantially the same.

4. The method defined by any one of claims 1-3 wherein said first end portion includes an open end for receiving a substance to be smoked in said first chamber and said second end portion includes an open end for inhaling vapor in said third chamber.

5. The method defined by any one of claims 1-4 further comprising after forming said third chamber, wrapping a wick around said formed middle portion.

6. The method defined by any one of claim 1-5 wherein the vial includes an opening at at least one of said first and second end portions.

7. A vial for packing a substance to be smoked from the vial, the vial comprising:
a first chamber having an open end dimensioned to receive a substance to be packed within the first chamber;
a second chamber in fluid connection with said first chamber separated from said first chamber by a neck portion having an inside diameter less than an inside diameter of said first chamber and an inside diameter of said second chamber, wherein an outside diameter of said first chamber, said second chamber and said neck portion are substantially the same;
a middle portion in fluid connection with said second chamber extending from an end of said second chamber to a first end of a third chamber, said third chamber in fluid connection with said middle portion at said first end of said third chamber, said third chamber having an inside diameter and outside diameter which is substantially the same as the inside and outside diameter of each of said first chamber and said second chamber, said middle portion having an inside diameter which is less than the inside diameter of said first, second and third chambers, and an outside diameter which is less than the outside diameter of said first, second and third chambers.

8. The vial of claim 7 wherein said first chamber, said neck portion, said second chamber, said middle portion and said third chamber are axially aligned.

9. The vial of any one of claims 7-8 wherein a length of the first chamber is less than a length of the middle portion.

10. The vial of any one of claims 7-9 wherein a length of the second chamber is less than a length of the middle portion.

11. The vial of any one of claims 7-10 wherein a length of the neck portion is less than a length of the first chamber and a length of the second chamber.

12. The vial of any one of claims 7-11 wherein the first chamber, the neck portion, the second chamber, the middle portion and the third chamber are integrally formed from a glass vial.

13. The vial of any one of claims 7-12 wherein said first end portion includes an open end for receiving a substance to be smoked in said first chamber and said second end portion includes an open end for inhaling vapor in said third chamber.

14. The vial of any one of claims 7-13 further comprising a wick wrapped around said middle portion.

15. The vial of any one of claims 7-14 wherein said third chamber includes an open end dimensioned to enable vapors in said third chamber to be inhaled.

## Patentansprüche

1. Verfahren zur Herstellung einer Phiole, wobei das Verfahren Folgendes umfasst:
Bereitstellen einer Phiole, wobei die Phiole einen ersten Endabschnitt und einen zweiten Endabschnitt aufweist, die durch ein röhrenförmiges Element verbunden sind, das einen hohlen Innenraum aufweist;
Bilden einer ersten Kammer und einer zweiten Kammer innerhalb des hohlen Innenraums des röhrenförmigen Elements, wobei die erste Kammer und die zweite Kammer durch einen Halsabschnitt innerhalb des hohlen Innenraums getrennt sind, die erste Kammer sich von dem ersten Endabschnitt zu einer ersten Seite des Halsabschnitts erstreckt und die zweite Kammer sich von einer zweiten Seite des Halsabschnitts erstreckt; und
Bilden eines mittleren Abschnitts innerhalb des hohlen Innenraums des röhrenförmigen Abschnitts, wobei ein Ende des mittleren Abschnitts einem Ende der zweiten Kammer benachbart ist;
Bilden einer dritten Kammer innerhalb des hohlen Innenraums des röhrenförmigen Elements, wobei die dritte Kammer sich von einem zweiten Ende des mittleren Abschnitts zu dem zweiten Endabschnitt erstreckt;
wobei der gebildete mittlere Abschnitt einen Außendurchmesser, der kleiner ist als ein Außendurchmesser von jeder von der ersten Kammer, der zweiten Kammer und der dritten Kammer, und einen Innendurchmesser aufweist, der kleiner ist als ein Innendurchmesser von jeder von der ersten Kammer, der zweiten Kammer und der dritten Kammer.

2. Verfahren nach Anspruch 1, wobei das Bilden der ersten Kammer und der zweiten Kammer Folgendes umfasst:
Anwenden von Hitze auf einen Abschnitt einer Wand, die den röhrenförmigen Abschnitt der Phiole bildet; und
während des Drehens der Phiole entlang ihrer Längsachse, Anwenden eines nach innen gerichteten Drucks auf den ersten Endabschnitt und den zweiten Endabschnitt und gleichzeitig Anwenden von Druck auf eine äußere Oberfläche des röhrenförmigen Elements an dem erhitzten Abschnitt der Wand, um den erhitzten Abschnitt der Wand in den hohlen Innenraum des röhrenförmigen Elements einzuknicken, um den Halsabschnitt innerhalb des hohlen Innenraums des röhrenförmigen Elements zu bilden, und zu bewirken, dass die äußere Oberfläche um den Halsabschnitt bündig mit der äußeren Oberfläche des Rests des röhrenförmigen Elements ist, wobei der Halsabschnitt einen Innendurchmesser aufweist, der kleiner ist als der Innendurchmesser von jeder von der ersten Kammer, der zweiten Kammer und der dritten Kammer.

3. Verfahren nach Anspruch 2, wobei das Bilden des mittleren Abschnitts Folgendes umfasst:
Anwenden von Hitze auf einen zweiten Abschnitt der Wand, die den röhrenförmigen Abschnitt der Phiole bildet, und Anwenden eines nach außen gerichteten Drucks auf den ersten Endabschnitt und den zweiten Endabschnitt, um den erhitzten zweiten Abschnitt der Wand um einen vorbestimmten Betrag zu strecken; und
nachdem der vorbestimmte Betrag an Streckung erreicht wurde, Anwenden eines nach innen gerichteten Drucks auf den ersten Endabschnitt und den zweiten Endabschnitt und bei gleichzeitigem Drehen der Phiole entlang ihrer Längsachse und Anwenden eines nach innen gerichteten Drucks auf den zweiten Abschnitt der Wand, bis der zweite Abschnitt der Wand einen gleichförmigen Außendurchmesser aufweist, der im Wesentlichen der gleiche wie der Außendurchmesser von jeder von der ersten, der zweiten und der dritten Kammer ist, wobei die Außendurchmesser von jeder von der ersten, der zweiten und der dritten Kammer im Wesentlichen gleich sind.

4. Verfahren nach einem der Ansprüche 1 bis 3, wobei der erste Endabschnitt ein offenes Ende zum Aufnehmen einer zu rauchenden Substanz in der ersten Kammer umfasst und der zweite Endabschnitt ein offenes Ende zum Inhalieren von Dampf in der dritten Kammer umfasst.

5. Verfahren nach einem der Ansprüche 1 bis 4, das ferner nach dem Bilden der dritten Kammer das Wickeln eines Dochts um den gebildeten mittleren Abschnitt umfasst.

6. Verfahren nach einem der Ansprüche 1 bis 5, wobei die Phiole eine Öffnung an mindestens einem von dem ersten und dem zweiten Endabschnitt umfasst.

7. Phiole zum Verpacken einer von der Phiole zu rauchenden Substanz, wobei die Phiole Folgendes umfasst:
eine erste Kammer, die ein offenes Ende aufweist, das bemessen ist, um eine zu verpackende Substanz innerhalb der ersten Kammer aufzunehmen;
eine zweite Kammer in Fluidverbindung mit der ersten Kammer, die von der ersten Kammer durch einen Halsabschnitt getrennt ist, der einen Innendurchmesser aufweist, der kleiner ist als ein Innendurchmesser der ersten Kammer und ein Innendurchmesser der zweiten Kammer, wobei ein Außendurchmesser der ersten Kammer, der zweiten Kammer und des Halsabschnitts im Wesentlichen gleich ist;
einen mittleren Abschnitt in Fluidverbindung mit der zweiten Kammer, der sich von einem Ende der zweiten Kammer zu einem ersten Ende einer dritten Kammer erstreckt, wobei die dritte Kammer sich in Fluidverbindung mit dem mittleren Abschnitt an dem ersten Ende der dritten Kammer befindet, die dritte Kammer einen Innendurchmesser und einen Außendurchmesser aufweist, die im Wesentlichen gleich dem Innen- und dem Außendurchmesser von jeder von der ersten Kammer und der zweiten Kammer sind, wobei der mittlere Abschnitt einen Innendurchmesser, der kleiner als der Innendurchmesser der ersten, der zweiten und der dritten Kammer ist, und einen Außendurchmesser aufweist, der kleiner als der Außendurchmesser der ersten, der zweiten und der dritten Kammer ist.

8. Phiole nach Anspruch 7, wobei die erste Kammer, der Halsabschnitt, die zweite Kammer, der mittlere Abschnitt und die dritte Kammer axial fluchten.

9. Phiole nach einem der Ansprüche 7 bis 8, wobei eine Länge der ersten Kammer kleiner ist als eine Länge des mittleren Abschnitts.

10. Phiole nach einem der Ansprüche 7 bis 9, wobei eine Länge der zweiten Kammer kleiner als eine Länge des mittleren Abschnitts ist.

11. Phiole nach einem der Ansprüche 7 bis 10, wobei eine Länge des Halsabschnitts kleiner als eine Länge der ersten Kammer und eine Länge der zweiten Kammer ist.

12. Phiole nach einem der Ansprüche 7 bis 11, wobei die erste Kammer, der Halsabschnitt, die zweite Kammer, der mittlere Abschnitt und die dritte Kammer einteilig aus einer Glasphiole gebildet sind.

13. Phiole nach einem der Ansprüche 7 bis 12, wobei der erste Endabschnitt ein offenes Ende zum Aufnehmen einer zu rauchenden Substanz in der ersten Kammer umfasst und der zweite Endabschnitt ein offenes Ende zum Inhalieren von Dampf in der dritten Kammer umfasst.

14. Phiole nach einem der Ansprüche 7 bis 13, die ferner einen um den mittleren Abschnitt gewickelten Docht umfasst.

15. Phiole nach einem der Ansprüche 7 bis 14, wobei die dritte Kammer ein offenes Ende umfasst, das bemessen ist, um das Inhalieren von Dämpfen in der dritten Kammer zu ermöglichen.

## Revendications

1. Procédé pour fabriquer un flacon, le procédé comprenant le fait de :
prévoir un flacon, le flacon ayant une première partie d'extrémité et une seconde partie d'extrémité raccordées par un élément tubulaire ayant un intérieur creux ;
former une première chambre et une deuxième chambre dans l'intérieur creux de l'élément tubulaire, dans lequel la première chambre et la deuxième chambre sont séparées par une partie de goulot dans l'intérieur creux, ladite première chambre s'étendant de ladite première partie d'extrémité à un premier côté de ladite partie de goulot, ladite deuxième chambre s'étendant à partir d'un second côté de ladite partie de goulot ; et
former une partie centrale dans l'intérieur creux de la partie tubulaire, une extrémité de ladite partie centrale étant adjacente à une extrémité de ladite deuxième chambre ;
former une troisième chambre dans l'intérieur creux de l'élément tubulaire, ladite troisième chambre s'étendant à partir d'une seconde extrémité de ladite partie centrale à ladite seconde partie d'extrémité ;
dans lequel ladite partie centrale formée a un diamètre externe qui est inférieur à un diamètre externe de chacune parmi ladite première chambre, ladite deuxième chambre et ladite troisième chambre, et un diamètre interne qui est inférieur à un diamètre interne de chacune parmi ladite première chambre, ladite deuxième chambre et ladite troisième chambre.

2. Procédé selon la revendication 1, dans lequel ladite formation de la première chambre et de la deuxième chambre comprend le fait de :
appliquer de la chaleur sur une partie d'une paroi formant la partie tubulaire du flacon ; et
tout en faisant tourner le flacon le long de son axe longitudinal, appliquer une pression vers l'intérieur sur la première partie d'extrémité et la seconde partie d'extrémité et appliquer simultanément la pression sur une surface extérieure de l'élément tubulaire au niveau de la partie chauffée de la paroi pour replier la partie chauffée de la paroi dans l'intérieur creux de l'élément tubulaire afin de former la partie de goulot dans l'intérieur creux de l'élément tubulaire, et amener la surface extérieure autour de la partie de goulot pour être à fleur avec la surface extérieure du reste de l'élément tubulaire, dans lequel ladite partie de goulot a un diamètre interne qui est inférieur audit diamètre interne de chacune parmi ladite première chambre, ladite deuxième chambre et ladite troisième chambre.

3. Procédé selon la revendication 2, dans lequel ladite formation de la partie centrale comprend le fait de :
appliquer de la chaleur sur une seconde partie de la paroi formant la partie tubulaire du flacon et appliquer une pression vers l'extérieur sur la première partie d'extrémité et la seconde partie d'extrémité pour étirer la seconde partie chauffée de la paroi selon une quantité prédéterminée ; et
après que ladite quantité prédéterminée d'étirement a été atteinte, appliquer une pression vers l'intérieur sur la première partie d'extrémité et la seconde partie d'extrémité et tout en faisant tourner le flacon le long de son axe longitudinal et appliquer une pression vers l'intérieur sur la seconde partie de la paroi jusqu'à ce que la seconde partie de la paroi ait un diamètre externe uniforme qui est sensiblement le même que le diamètre externe de chacune parmi les première, deuxième et troisième chambres, ledit diamètre externe de chacune parmi les première, deuxième et troisième chambres étant sensiblement le même.

4. Procédé selon l'une quelconque des revendications 1 à 3, dans lequel ladite première partie d'extrémité comprend une extrémité ouverte pour recevoir une substance à fumer dans ladite première chambre et ladite seconde partie d'extrémité comprend une extrémité ouverte pour inhaler la vapeur dans ladite troisième chambre.

5. Procédé selon l'une quelconque des revendications 1 à 4, comprenant en outre, après avoir formé ladite troisième chambre, le fait d'enrouler une mèche autour de ladite partie centrale formée.

6. Procédé selon l'une quelconque des revendications 1 à 5, dans lequel le flacon comprend une ouverture au niveau d'au moins l'une desdites première et seconde parties d'extrémité.

7. Flacon pour emballer une substance à fumer à partir du flacon, le flacon comprenant :
une première chambre ayant une extrémité ouverte dimensionnée pour recevoir une substance à emballer dans la première chambre ;
une deuxième chambre en raccordement de fluide avec ladite première chambre séparée de ladite première chambre par une partie de goulot ayant un diamètre intérieur inférieur à un diamètre intérieur de ladite première chambre et un diamètre intérieur de ladite deuxième chambre, dans lequel les diamètres extérieurs de ladite première chambre, de ladite deuxième chambre et de ladite partie de goulot sont sensiblement les mêmes ;
une partie centrale en raccordement de fluide avec ladite deuxième chambre s'étendant à partir d'une extrémité de ladite deuxième chambre à une première extrémité d'une troisième chambre, ladite troisième chambre étant en raccordement de fluide avec ladite partie centrale au niveau de ladite première extrémité de ladite troisième chambre, ladite troisième chambre ayant un diamètre intérieur et un diamètre extérieur qui sont sensiblement identiques aux diamètres intérieur et extérieur de chacune parmi ladite première chambre et ladite deuxième chambre, ladite partie centrale ayant un diamètre intérieur qui est inférieur au diamètre intérieur desdites première, deuxième et troisième chambres, et un diamètre extérieur qui est inférieur au diamètre extérieur desdites première, deuxième et troisième chambres.

8. Flacon selon la revendication 7, dans lequel ladite première chambre, ladite partie de goulot, ladite deuxième chambre, ladite partie centrale et ladite troisième chambre sont axialement alignées.

9. Flacon selon l'une quelconque des revendications 7 à 8, dans lequel une longueur de la première chambre est inférieure à une longueur de la partie centrale.

10. Flacon selon l'une quelconque des revendications 7 à 9, dans lequel une longueur de la deuxième chambre est inférieure à une longueur de la partie centrale.

11. Flacon selon l'une quelconque des revendications 7 à 10, dans lequel une longueur de la partie de goulot est inférieure à une longueur de la première chambre et une longueur de la deuxième chambre.

12. Flacon selon l'une quelconque des revendications 7 à 11, dans lequel la première chambre, la partie de goulot, la deuxième chambre, la partie centrale et la troisième chambre sont formées de manière solidaire à partir d'un flacon en verre.

13. Flacon selon l'une quelconque des revendications 7 à 12, dans lequel ladite première partie d'extrémité comprend une extrémité ouverte pour recevoir une substance à fumer dans ladite première chambre et ladite seconde partie d'extrémité comprend une extrémité ouverte pour inhaler la vapeur dans ladite troisième chambre.

14. Flacon selon l'une quelconque des revendications 7 à 13, comprenant en outre une mèche enroulée autour de ladite partie centrale.

15. Flacon selon l'une quelconque des revendications 7 à 14, dans lequel ladite troisième chambre comprend une extrémité ouverte dimensionnée pour permettre d'inhaler les vapeurs dans ladite troisième chambre.
